# EUROPÄISCHE PATENTSCHRIFT

(11) **EP 2 477 717 B1**
(45) Veröffentlichungstag und Bekanntmachung des Hinweises auf die Patenterteilung: **06.11.2013**
(21) Anmeldenummer: 10781808.0
(22) Anmeldetag: 15.09.2010
(51) Int. Cl.: B01D 46/24, B01D 29/15

(54) **FILTER FÜR FLÜSSIGE ODER GASFÖRMIGE MEDIEN**
FILTER FOR LIQUID OR GASEOUS MEDIA
FILTRE POUR SUBSTANCES LIQUIDES OU GAZEUSES

(30) Priorität: 15.09.2009 DE 102009041347
(43) Veröffentlichungstag der Anmeldung: 25.07.2012
(73) Patentinhaber: Karl Küfner KG, 72461 Albstadt (DE)
(72) Erfinder: KONZELMANN, Martin, 72474 Winterlingen (DE)
(74) Vertreter: Geitz Truckenmüller Lucht
(86) Internationale Anmeldenummer: PCT/DE2010/001083
(87) Internationale Veröffentlichungsnummer: WO 2011/032539

(56) Entgegenhaltungen:
- DE-U1- 9 016 138
- JP-A- 2000 266 235
- US-A- 4 204 960
- US-B1- 7 041 217

## Beschreibung

Die Erfindung geht aus von einem Filter für flüssige oder gasförmige Medien mit einer zylindrischen Form in Schließstellung und mit einer gekrümmten Form in Öffnungsstellung, mit einem Rahmen und mindestens einem an dem Rahmen angeordneten Filterelement.

Derartige Filter werden aufgrund ihrer zylindrischen Form in Schließstellung auch als Ringfilter bezeichnet. Bezogen auf die Schließstellung ist das Filter an den Stirnseiten des Zylinders offen. Das Filterelement besteht aus einem Filtermaterial, welches kleine Filterelementöffnungen zum Durchströmen des Mediums aufweist, und befindet sich an dem Mantel des Zylinders oder ist parallel zum Mantel des Zylinders angeordnet. Der Zylinder wird durch den Rahmen aufgespannt, an welchem das Filterelement angeordnet und gehalten ist. Diese Filter werden auf zylindrische Hohlkörper, beispielsweise auf eine Welle aufgesetzt. Das auf einen Hohlkörper montierte Filter kann in ein Gehäuse, beispielsweise ein Ventilgehäuse eingesetzt werden. Das Gehäuse kann ebenfalls einen zylindrischen Hohlkörper aufweisen. Die Welle kann zur Befestigung eine Nut aufweisen. Zur Anordnung des Filters an einer Welle wird das Filter in der Öffnungsstellung um die Welle gelegt und anschließend das Filter in die Schließstellung überführt. Die Nut an der Welle sorgt dafür, dass das Filter an der Welle fest angeordnet ist und sich seine Position nicht unerwünscht ändert.

Die Filter dienen der Filtration von durch den Hohlkörper strömenden Flüssigkeiten oder Gasen wie zum Beispiel Druck- und Schmiermittel, Kraftstoff, Hydrauliköl, Wasser, Kunststoffschmelze oder Luft. Die Filter halten Feststoffe und sonstige Verunreinigungen zurück und schützen damit Bauelemente, die von dem flüssigen oder gasförmigen Medium durchströmt werden, vor einer Beeinträchtigung oder Beschädigung.

Bekannte derartige Filter sind mit einem Rahmen ausgestattet, der zwei ringförmige Rahmen-Elemente aufweist. Diese sind durch Streben miteinander verbunden. Die Streben verlaufen parallel zu der Längsachse des zylindrischen Filters. Sie verlaufen damit in axialer Richtung. An einer der Querstreben befindet sich eine Kerbe, welche ebenfalls in axialer Richtung verläuft. Sie erstreckt sich bis in die ringförmigen Rahmen-Elemente. Die Kerbe befindet sich zwischen zwei Abschnitten das Rahmens, die jeweils einen halben Zylinder aufspannen. Der Zylinder ist dabei in axialer Richtung halbiert. An der der Kerbe gegenüberliegenden Seite weist der Rahmen zwei offene Enden auf, die mit Befestigungsmitteln aufgestattet sind. Die Befestigungsmittel dienen zum lösbaren Befestigen der Enden aneinander in der Schließstellung des Filters. Die Kerbe dient als Scharnier, um das Filter in die Öffnungsstellung aufzuklappen und das Filter aufzuweiten. Zum Öffnen und Schließen wird einer der beiden halbzylindrischen Abschnitte relativ zum anderen halbzylindrischen Abschnitt um die Kerbe gedreht. Derartige Filter sind aus der DE 90 16 138 U1, der US 7 041 217 B1 und der US 4 204 960 A bekannt.

Diese bekannten Filter weisen den Nachteil auf, dass die Kerbe eine Knickstelle des Rahmens darstellt, an der das Material beim Öffnen und Schließen stark gestaucht und gedehnt wird. Dies kann zu einer Beschädigung beim Einbau des Filters führen, der optisch nicht erkennbar ist. Darüber hinaus kann eine Beschädigung des Materials bereits vor dem Einbau im Bereich der Kerbe vorliegen, die ebenfalls nicht erkannt wird. Aufgrund der geringen Materialstärke im Bereich der Kerbe können Beschädigungen dazu führen, dass das Filter unter Druckbelastung während der Anwendung am Einsatzort auseinanderbricht.

Die JP 2000 266235 A offenbart ein ringförmiges Filter mit einem zylindrischen Rahmen und einem daran angeordneten Filterelement. Das Filter weist eine zylindrische Form in Schließstellung und eine C-förmige Öffnungsstellung auf. Der Rahmen weist zwei erste Abschnitte und einen zweiten Abschnitt auf, wobei der Rahmen in dem zweiten Abschnitt an der Außenseite abgeflacht ist. Dadurch ist die Wandstärke des zweiten Abschnitts kleiner als die Wandstärke der ersten Abschnitte, wodurch eine Deformation des Rahmens in dem zweiten Abschnitt beim Öffnen des Filters begünstigt wird. Als nachteilig erweist sind jedoch, dass die Deformation auf den zweiten Abschnitt beschränkt ist, so dass ein hohes Risiko einer Beschädigung des Rahmens beim Öffnen und Schließen in diesem Bereich besteht. Das Filter weist zwar an der Innenseite Vorsprünge auf, jedoch dienen diese dazu, das Filter an einem Bauteil abzustützen. Sie begünstigen das Öffnen des Filters nicht und reduzieren auch nicht die Gefahr von Beschädigungen beim Öffnen des Filters.

Der Erfindung liegt die Aufgabe zugrunde, ein Filter für flüssige oder gasförmige Medien zur Verfügung zu stellen, das nicht die Gefahr einer Materialschädigung oder eines Auseinanderbrechens beim Öffnen und Schließen aufweist.

Diese Aufgabe wird durch ein Filter mit den Merkmalen des Anspruchs 1 gelöst. Im Unterschied zu den bekannten Filtern weist das erfindungsgemäße Filter nicht eine Knickstelle oder Kerbe auf sondern eine Vielzahl von ersten und zweiten Abschnitten mit unterschiedlicher Materialstärke oder Dicke. Damit entfällt ein Scharnier wie bei den bekannten Filtern. Im Bereich der ersten Abschnitte weist der Rahmen eine erste Wandstärke oder Dicke auf. Im Bereich der zweiten Abschnitte weist der Rahmen eine zweite Wandstärke oder Dicke auf. Dabei wird die Wandstärke oder Dicke in Schließstellung des Filters in radialer Richtung bestimmt. Die Dicke stimmt mit der Wandstärke des Rahmens überein. Die erste Wandstärke ist dabei größer als die zweite Wandstärke. Jeweils ein zweiter Abschnitt befindet sich zwischen zwei ersten Abschnitten. Erste und zweite Abschnitte wechseln sich ab. Die zweiten Abschnitte können dabei beispielsweise über den halben oder ganzen Umfang des Rahmens verteilt sein. Die Schwächung der Wandstärke der zweiten Abschnitte gegenüber der Wanderstärke der ersten Abschnitte ist an der nach außen weisenden Seite des Rahmens vorgesehen. Die Außenseite bezieht sich dabei auf die zylindrische Form des Filters in der Schließstellung und betrifft den Mantel der zylindrischen Form.

Die Anzahl, die Form und die Position der zweiten Abschnitte können für verschiedene Anwendungen unterschiedlich sein. Besonders vorteilhaft sind beispielsweise Filter mit mindestens drei zweiten Abschnitten in einem Segment des Filters in Schließstellung von 90°. Sind die zweiten Abschnitte über die Hälfte des zylindrischen Mantels des Filters verteilt, so sind mindestens fünf zweite Abschnitte vorteilhaft. Sind die zweiten Abschnitte über den gesamten zylindrischen Mantel des Filters verteilt, so sind ebenfalls mindestens sieben zweite Abschnitte von Vorteil.

Die ersten und zweiten Abschnitte befinden sich an den ringförmigen Rahmen-Elementen des ringförmigen Filters. Sie können sich zusätzlich auch an den Streben befinden, welche die ringförmigen Rahmen-Elemente miteinander verbinden.

Im Folgenden bezieht sich der Hinweis auf die Schließstellung des Filters im Zusammenhang mit Angaben hinsichtlich der Form oder der Position von Komponenten des Filters stets auf die zylindrische Form des Filters in Schließstellung. Die Angaben hinsichtlich der Form und der Position der Komponenten des Filters sind in der Schließstellung besser zu umschreiben, da das erfindungsgemäße Filter in der Schließstellung stets eine zylindrische Form aufweist. Dagegen weist das Filter in der Öffnungsstellung eine gekrümmte Form, die eines Buchstaben C, auf, wobei die Aufweitung dieser Form unterschiedlich sein kann.

Dank der zweiten Abschnitte mit einer geringeren Dicke lässt sich das erfindungsgemäße Filter besser und leichter aufweiten als bekannte Filter. Hierzu wird nicht ein Teil des Rahmens um einen anderen Teil des Rahmen geschwenkt oder gedreht. Vielmehr wird der gesamte Rahmen aufgeweitet wobei sich der Rahmen im Bereich der zweiten Abschnitte aufgrund der geringeren Wandstärke leichter elastisch verformen lässt als im Bereich der ersten Abschnitte. Anstatt dabei an einer Stelle des Rahmens einen Knick mit einer starken Materialstauchung herbeizuführen, werden alle zweiten Abschnitte leicht verformt. Die Verformung ist dabei auf den gesamten Umfang, insbesondere auf den Bereich, in dem sich die zweiten Abschnitte befinden, verteilt. Die Verformung ist elastisch, so dass der Rahmen nach Wegfall der die Aufweitung auslösenden Kraft wieder in seine gekrümmte Ausgangsstellung zurückgekehrt. Die Wandstärke der zweiten Abschnitte ist hierbei größer als die Wandstärke im Bereich der Kerbe oder Knickstelle bekannter Filter. Auf diese Weise wird eine Materialbeschädigung beim Öffnen und Schließen des Filters mit der Folge des Auseinanderbrechens unter Druckeinwirkung vermieden.

Dank der ersten Abschnitte mit der größeren Dicke oder Wandstärke weist das Filter die notwendige Stabilität auf um das Filterelement in der vorgesehenen Form zu halten und das Filter am gewünschten Einsatzort zu befestigen.

Nach einer vorteilhaften Ausgestaltung der Erfindung sind die zweiten Abschnitte gleichmäßig zwischen den Enden des Rahmens verteilt. Erste und zweite Abschnitte wechseln sich regelmäßig ab, wobei die in Umfangsrichtung gemessene Breite aller ersten Abschnitte untereinander vorteilhafterweise gleich ist. Entsprechendes gilt für die zweiten Abschnitte. Dadurch wird eine gleichmäßige Aufweitung des Filters ermöglicht.

Nach einer weiteren vorteilhaften Ausgestaltung der Erfindung sind die zweiten Abschnitte über die Hälfte des Rahmens verteilt. In diesem Fall ist eine Aufweitung durch Verformung insbesondere in der mit den zweiten Abschnitten ausgestatteten Hälfte des Rahmens möglich.

Nach einer weiteren vorteilhaften Ausgestaltung der Erfindung verlaufen die ersten und/ oder die zweiten Abschnitte in axialer Richtung des Filters in Schließstellung. Da eine Aufweitung des Filters zu einer Vergrößerung des Radius des zylindrischen Filters führt, ist ein Verlauf der zweiten Abschnitte in axialer Richtung besonders geeignet. Die zweiten Abschnitte können jedoch auch unter einem Winkel von mehr als 0° und weniger als 90° gegen die axiale Richtung verlaufen.

Nach einer weiteren vorteilhaften Ausgestaltung der Erfindung ist das Filterelement in der Schließstellung an der nach innen weisenden Seite des Rahmens angeordnet.

Nach einer weiteren vorteilhaften Ausgestaltung der Erfindung ist die in Schließstellung nach innen weisende Seite des Rahmens frei von Vertiefungen und Vorsprüngen. Das Filter eignet sich damit insbesondere zum Anordnen an der Außenseite einer Welle. Ferner kann das Filterelement an der Innenseite ohne Beeinträchtigung befestigt werden. Der Rahmen des Filters legt sich dabei mit seiner Innenseite dichtend an die Oberfläche eines Bauteils, beispielsweise einer Welle, an. Darüber hinaus weist die in Schließstellung nach außen weisende Seite des Rahmens an den zweiten Abschnitten eine Vertiefung gegenüber den ersten Abschnitten auf. Durch die Vertiefung an der Außenseite wird an den zweiten Abschnitten eine gegenüber den ersten Abschnitten geringere Wandstärke und Dicke erreicht.

Nach einer weiteren vorteilhaften Ausgestaltung der Erfindung weist die in Schließstellung nach innen weisende Seite des Filters Vorsprünge auf. Diese ermöglichen ein Umspülen des Zwischenraums zwischen dem Rahmen des Filters und der Außenseite des Bauteils, auf welches das Filter aufgesetzt ist. Die Stirnseiten des Rahmens des Filters liegen dichtend an den senkrecht zur Längsachse ausgerichteten Flanken der Nut des Bauteils an, so dass ein Ausströmen des Mediums durch den Zwischenraum zwischen dem Rahmen des Filters und dem Bauteil verhindert wird. Das Medium kann nur durch das Filterelement ein- und ausströmen.

Die zweiten Abschnitte weisen in Schließstellung eine Krümmung nach innen auf.

Nach einer weiteren vorteilhaften Ausgestaltung der Erfindung ist zumindest ein Teil der ersten Abschnitte kleiner ist die benachbarten zweiten Abschnitte. Dies bezieht sich auf die Ausdehnung der ersten und zweiten Abschnitte in Umfangsrichtung des durch das Filter in Schließstellung gebildeten Zylinders.

Nach einer weiteren vorteilhaften Ausgestaltung der Erfindung weist der Rahmen zwei parallele Rahmen-Elemente auf. Dabei handelt es sich um in Schließstellung des Filters ringförmige Rahmen-Elemente, die parallel zueinander ausgerichtet sind. Die ersten und zweiten Abschnitte sind Teil der parallelen Rahmen-Elemente.

Nach einer weiteren vorteilhaften Ausgestaltung der Erfindung weisen die Enden als Befestigungsmittel zahnartige Elemente auf, die im Schließzustand formschlüssig ineinander greifen. Die zahnartigen Elemente erlauben das mehrfache Öffnen und Schließen des Filters, ohne dass das Filter dabei beschädigt wird.

Nach einer weiteren vorteilhaften Ausgestaltung der Erfindung weisen die Enden des Rahmens des Filters als Befestigungsmittel Nut- und Federelemente auf, die im Schließzustand formschlüssig ineinander greifen. Dabei ist ein Ende des Rahmens des Filters mit einer Nut oder mehreren Abschnitten mit Nuten versehen. Das andere Ende ist mit einer oder mehreren Federn oder Spunden ausgestattet, die im Schließzustand formschlüssig in der Nut des einen Endes des Rahmens liegen.

Weitere Vorteile und vorteilhafte Ausgestaltungen der Erfindung sind der nachfolgenden Beschreibung, der Zeichnung und den Ansprüchen zu entnehmen.

### Zeichnung

In der Zeichnung ist ein Ausführungsbeispiel der Erfindung dargestellt. Es zeigen:
- Figur 1: Filter in Öffnungsstellung in perspektivischer Ansicht,
- Figur 2: Filter gemäß Figur 1 in Schließstellung in perspektivischer Ansicht.

### Beschreibung des Ausführungsbeispiels

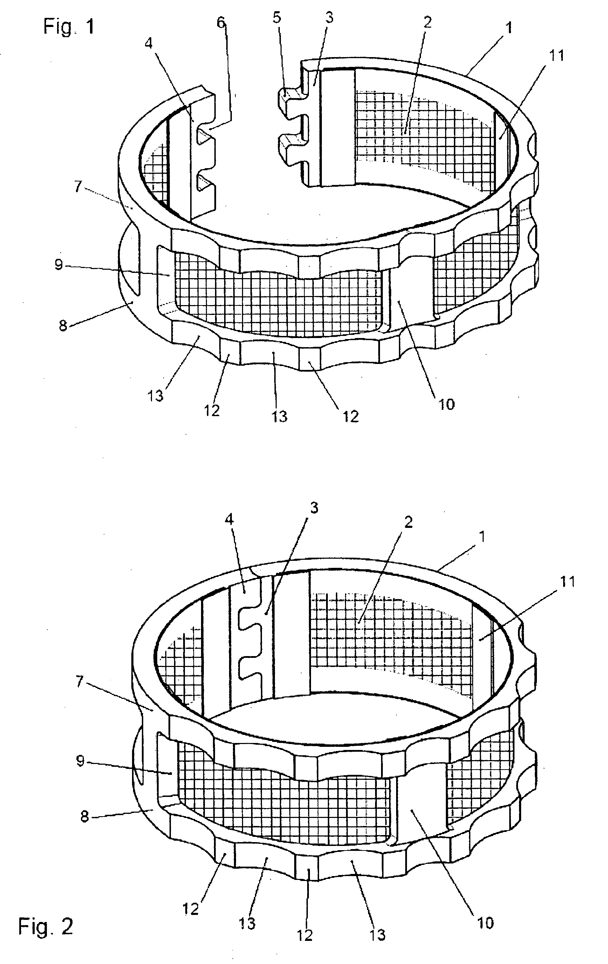

In Figur 1 und 2 ist ein Filter dargestellt, welches in Schließstellung gemäß Figur 2 eine zylindrische Form und in Öffnungsstellung gemäß Figur 1 die gekrümmte Form eines Buchstaben C aufweist. Das Filter besteht aus einem Rahmen 1 und einem an dem Rahmen befestigten Filterelement 2. An den beiden Enden 3 und 4 ist der Rahmen mit Befestigungselementen 5 und 6 ausgestattet, die in der Schließstellung gemäß Figur 2 zahnartig ineinander greifen. Hierzu weisen die Befestigungselemente 5 und 6 Zähne und Zwischenräume zwischen den Zähnen auf. Die Zwischenräume eines Befestigungselements sind gerade so groß, dass jeweils ein Zahn des anderen Befestigungselements formschlüssig in jeweils einen Zwischenraum passt.

Der Rahmen 1 weist zwei parallele Rahmen-Elemente 7 und 8 auf, die in Schließstellung gemäß Figur 2 ringförmig sind. Die beiden Rahmen-Elemente 7 und 8 sind über Streben 9, 10 und 11 miteinander verbunden. Der Rahmen ist an den Rahmen-Elementen 7 und 8 mit ersten Abschnitten 12 und zweiten Abschnitten 13 ausgestattet. Die zweiten Abschnitte 13 weisen eine geringere Dicke und Wandstärke auf als die ersten Abschnitte 12. Dabei sind die zweiten Abschnitte 13 an der nach außen weisenden Seite des Rahmens nach innen gekrümmt oder gewölbt. Dadurch wird eine Schwächung der Wandstärke der zweiten Abschnitte 13 gegenüber der Wandstärke der ersten Abschnitte 12 erzielt. Die nach innen weisende Seite des Rahmens ist frei von Vorsprüngen und Vertiefungen. Die zweiten Abschnitte 13 sind in Umfangsrichtung größer als die ersten Abschnitte. Der Winkel, der durch einen zweiten Abschnitt 13 aufgespannt wird, ist größer als der Winkel, der durch einen ersten Abschnitt aufgespannt wird. Die ersten und zweiten Abschnitte 12 und 13 sind über die Hälfte des Rahmens 1 verteilt. In der anderen Hälfte ist die Wandstärke des Rahmens gleich der Wandstärke der ersten Abschnitte 12.

Zum Öffnen des Filters werden die Befestigungselemente 5 und 6 voneinander gelöst. Dann wird der Rahmen 1 in eine Öffnungsstellung aufgeweitet. Dies ist in Figur 1 dargestellt. Dabei wird der Rahmen insbesondere im Bereich aller zweiten Abschnitte 13 elastisch verformt. Jeder der zweiten Abschnitte 13 wird dabei nur ein wenig verformt, so dass keine Materialstauchung auftritt.

Sämtliche Merkmale der Erfindung können auch in beliebiger Kombination miteinander erfindungswesentlich sein.

### Bezugszahlen

- 1: Rahmen
- 2: Filterelement
- 3: offenes Ende des Rahmens
- 4: offenes Ende des Rahmens
- 5: Befestigungselement
- 6: Befestigungselement
- 7: Rahmen-Element
- 8: Rahmen-Element
- 9: Strebe
- 10: Strebe
- 11: Strebe
- 12: erster Abschnitt
- 13: zweiter Abschnitt

## Patentansprüche

1. Filter für flüssige oder gasförmige Medien
mit einer zylindrischen Ringform des Filters in Schließstellung,
mit einer gekrümmten C-Form des Filters in Öffnungsstellung,
mit einem Rahmen (1), der einen Zylinder aufspannt und an welchem ein Filterelement (2) angeordnet ist, wobei der Rahmen (1) an den Stirnseiten bezogen auf die zylindrische Form des Filters in Schließstellung offen ist,
wobei das mindestens einem an dem Rahmen (1) entlang zumindest eines Teils des Mantels der zylindrischen Ringform oder parallel zum Mantel der zylindrischen Ringform angeordnete Filterelement (2) aus einem Filtermaterial besteht, welches kleine Filterelementöffnungen zum Durchströmen des Mediums aufweist,
mit zwei Enden (3, 4) des Rahmens (1), welche mit Befestigungsmitteln (5, 6) zur Befestigung aneinander in Schließstellung ausgestattet sind, mit mehreren ersten Abschnitten (12) des Rahmens (1), an denen der Rahmen (1) eine erste Wandstärke aufweist,
mit mehreren zweiten Abschnitten (13) des Rahmens (1), an denen der Rahmen (1) eine zweite Wandstärke aufweist, welche kleiner ist als die erste Wandstärke, wobei die Wandstärke in Schließstellung des Filters in radialer Richtung gemessen ist,
mit jeweils einem zweiten Abschnitt (13) zwischen zwei ersten Abschnitten (12),
wobei die Schwächung der Wandstärke der zweiten Abschnitte gegenüber den ersten Abschnitten in Schließstellung an der Außenseite des Rahmens als Krümmung der zweiten Wandabschnitte nach innen in Schließstellung ausgebildet ist.

2. Filter nach Anspruch 1, **dadurch gekennzeichnet, dass** die zweiten Abschnitte (13) gleichmäßig zwischen den Enden (3, 4) des Rahmens (1) verteilt sind.

3. Filter nach Anspruch 1, **dadurch gekennzeichnet, dass** die zweiten Abschnitte (13) über eine Hälfte des Rahmens (1) verteilt sind.

4. Filter nach einem der vorhergehenden Ansprüche, **dadurch gekennzeichnet, dass** sich die ersten und/ oder die zweiten Abschnitte (12, 13) in axialer Richtung des Filters in Schließstellung erstrecken.

5. Filter nach einem der vorhergehenden Ansprüche, **dadurch gekennzeichnet, dass** das Filterelement (2) an der in der Schließstellung nach innen weisenden Seite des Rahmens (1) angeordnet ist.

6. Filter nach einem der vorhergehenden Ansprüche, **dadurch gekennzeichnet, dass** die in Schließstellung nach innen weisende Seite des Rahmens (1) frei von Vertiefungen und Vorsprüngen ist, und dass die in Schließstellung nach außen weisende Seite des Rahmens (1) an den zweiten Abschnitten (13) eine Vertiefung gegenüber den ersten Abschnitten (12) aufweist.

7. Filter nach einem der Ansprüche 1 bis 5, **dadurch gekennzeichnet, dass** die in Schließstellung nach innen weisende Seite des Rahmens (1) Vorsprünge aufweist.

8. Filter nach einem der vorhergehenden Ansprüche, **dadurch gekennzeichnet, dass** zumindest ein Teil der ersten Abschnitte (12) kleiner ist als die benachbarten zweiten Abschnitte (13).

9. Filter nach einem der vorhergehenden Ansprüche, **dadurch gekennzeichnet, dass** der Rahmen (1) zwei parallele Rahmenelemente (7, 8) aufweist, und dass die ersten und zweiten Abschnitte (12, 13) Teil der parallelen Rahmenelemente (7, 8) sind.

10. Filter nach einem der vorhergehenden Ansprüche, **dadurch gekennzeichnet, dass** die Enden (3, 4) als Befestigungsmittel (5, 6) zahnartige Elemente aufweisen, die im Schließzustand formschlüssig ineinander greifen.

11. Filter nach einem der Ansprüche 1 bis 9, **dadurch gekennzeichnet, dass** die Enden (3, 4) als Befestigungsmittel (5, 6) Nut- und Federelemente aufweisen, die im Schließzustand formschlüssig ineinander greifen.

## Claims

1. Filter for liquid or gaseous media
having a cylindrical ring form of the filter in the closed position,
having a curved C form of the filter in the open position,
comprising a frame (1) that clamps a cylinder and at which a filter element (2) is located, whereby the frame (1) is open on the face sides relative to the cylindrical form of the filter in the closed position,
whereby at least one filter element (2), consisting of a filter material having small filter element openings to allow the medium to flow through, is arranged on the frame (1) along at least one part of the jacket of the cylindrical ring form or parallel to the jacket of the cylindrical ring form, comprising two ends (3, 4) of the frame (1) which are equipped with fixing means (5, 6) for fixing to one another in the closed position,
comprising several first sections (12) of the frame (1) on which the frame (1) has a first wall thickness,
comprising several second sections (13) of the frame (1) on which the frame (1) has a second wall thickness which is less than the first wall thickness, whereby the wall thickness in the closed position of the filter is measured in the radial direction,
comprising respectively a second section (13) between two first sections (12),
whereby the reduction in the wall thickness of the second sections compared with the first sections in the closed position is designed on the outer side of the frame as an inward curve of the second wall section in the closed position.

2. Filter according to claim 1, **characterised in that** the second sections (13) are distributed evenly between the ends (3, 4) of the frame (1).

3. Filter according to claim 1, **characterised in that** the second sections (13) are distributed across one half of the frame (1).

4. Filter according to one of the previous claims, **characterised in that** the first and/or second sections (12, 13) extend in the axial direction of the filter in the closed position.

5. Filter according to one of the previous claims, **characterised in that** the filter element (2) is arranged on the side of the frame (1) showing to the inside in the closed position.

6. Filter according to one of the previous claims, **characterised in that** the side of the frame (1) showing to the inside in the closed position is free of indentations and projections and that the side of the frame (1) showing to the outside in the closed position has on the second sections (13) an indentation compared with the first sections (12).

7. Filter according to one of claims 1 to 5, **characterised in that** the side of the frame (1) showing to the inside in the closed position has projections.

8. Filter according to one of the previous claims, **characterised in that** at least one part of the first sections (12) is smaller than the adjacent second sections (13).

9. Filter according to one of the previous claims, **characterised in that** the frame (1) has two parallel frame elements (7, 8) and that the first and second sections (12, 13) are part of the parallel frame elements (7, 8).

10. Filter according to one of the previous claims, **characterised in that** the ends (3, 4) have as fixing means (5, 6) denticular elements that interlock positively in the closed position.

11. Filter according to one of claims 1 to 9, **characterised in that** the ends (3, 4) have as fixing means (5, 6) tongue and groove elements that interlock positively in the closed position.

## Revendications

1. Filtre pour substances liquides ou gazeuses
présentant une forme d'anneau cylindrique en position fermée,
une forme en C courbée en position ouverte,
un cadre (1) qui serre un cylindre et sur lequel un élément filtrant (2) est disposé, ledit cadre (1) étant, rapporté à la forme cylindrique du filtre en position fermée, ouvert au niveau de ses faces frontales,
ledit au moins un élément filtrant (2) disposé sur le cadre (1) le long au moins d'une partie du corps de la forme d'anneau cylindrique ou parallèlement au corps de la forme d'anneau cylindrique se composant d'un matériau filtrant doté de petites ouvertures filtrantes pour le passage de la substance,
deux extrémités (3, 4) du cadre (1) équipées de dispositifs de fixation (5, 6) pour fixer les extrémités l'une à l'autre en position fermée,
plusieurs premières sections (12) du cadre (1) au niveau desquelles le cadre (1) présente une première épaisseur,
plusieurs deuxièmes sections (13) du cadre (1) au niveau desquelles le cadre (1) présente une deuxième épaisseur qui est inférieure à la première épaisseur, ladite épaisseur étant mesurée en direction radiale en position fermée du filtre,
respectivement une deuxième section (13) se trouvant entre deux premières sections (12),
la réduction de l'épaisseur des deuxièmes sections par rapport aux premières sections en position fermée sur la face extérieure du cadre se présentant sous forme de courbure vers l'intérieur des deuxièmes sections en position fermée.

2. Filtre selon la revendication 1, **caractérisé en ce que** les deuxièmes sections (13) sont réparties régulièrement entre les extrémités (3, 4) du cadre (1).

3. Filtre selon la revendication 1, **caractérisé en ce que** les deuxièmes sections (13) sont réparties sur une moitié du cadre (1).

4. Filtre selon l'une quelconque des revendications précédentes, **caractérisé en ce que** les premières et/ou deuxièmes sections (12, 13) s'étendent dans la direction axiale du filtre en position fermée.

5. Filtre selon l'une quelconque des revendications précédentes, **caractérisé en ce que** l'élément filtrant (2) est disposé sur la face du cadre (1) orientée vers l'intérieur en position fermée.

6. Filtre selon l'une quelconque des revendications précédentes, **caractérisé en ce que** la face du cadre (1) orientée vers l'intérieur en position fermée ne présente aucun creux et aucune partie en saillie, et **en ce que** la face du cadre (1) orientée vers l'extérieur en position fermée présente un creux au niveau des deuxièmes sections (13) par rapport aux premières sections (12).

7. Filtre selon l'une quelconque des revendications 1 à 5, **caractérisé en ce que** la face du cadre (1) orientée vers l'intérieur en position fermée présente des parties en saillies.

8. Filtre selon l'une quelconque des revendications précédentes, **caractérisé en ce qu'**au moins une partie des premières sections (12) est plus petite que les deuxièmes sections (13) voisines.

9. Filtre selon l'une quelconque des revendications précédentes, **caractérisé en ce que** le cadre (1) présente deux éléments de cadre parallèles (7, 8), et **en ce que** les premières et deuxièmes sections (12, 13) font partie des éléments de cadre parallèles (7, 8).

10. Filtre selon l'une quelconque des revendications précédentes, **caractérisé en ce que** les extrémités (3, 4) présentent en tant que dispositifs de fixation (5, 6) des éléments en forme de dent qui s'engrènent de façon solidaire l'un dans l'autre à l'état fermé.

11. Filtre selon l'une quelconque des revendications 1 à 9, **caractérisé en ce que** les extrémités (3, 4) présentent en tant que dispositifs de fixation (5, 6) des éléments à rainure et languette qui s'engrènent de façon solidaire l'un dans l'autre à l'état fermé.
